# EUROPÄISCHE PATENTSCHRIFT

(11) **EP 0 505 719 B1**
(45) Veröffentlichungstag und Bekanntmachung des Hinweises auf die Patenterteilung: **12.10.1994**
(21) Anmeldenummer: 92102635.7
(22) Anmeldetag: 18.02.1992
(51) Int. Cl.: F16C 11/06

(54) **Kugelgelenk**
Ball joint
Articulation à rotule

(30) Priorität: 23.03.1991 DE 4109697
(43) Veröffentlichungstag der Anmeldung: 30.09.1992
(73) Patentinhaber: TRW Fahrwerksysteme GmbH & Co. KG, 40547 Düsseldorf (DE)
(72) Erfinder: Henkel, Günther, W-4000 Düsseldorf (DE)
(74) Vertreter: Stenger, Watzke & Ring Patentanwälte

(56) Entgegenhaltungen:
- DE-C- 3 502 233
- FR-A- 2 634 839
- GB-A- 2 100 337
- US-A- 3 014 767

## Beschreibung

Die Erfindung betrifft ein Kugelgelenk mit einer in einem Gelenkgehäuse angeordneten Gelenkkugel, mindestens einer zwischen dem Gelenkgehäuse und der Gelenkkugel angeordneten Lagerschale und mit mindestens einem zwischen Gelenkgehäuse und Lagerschale angeordneten Druckring, welcher auf dem Außenmantel der Lagerschale aufliegt und diese in Axialrichtung des Gelenkgehäuseinnenraums verspannt.

Derartige Kugelgelenke sind bereits im Stand der Technik bekannt. Beispielsweise ist aus der DE-C 35 02 233 ein Kugelgelenk mit einer in einem Gehäuseinnenraum aufgenommenen Gelenkkugel bekannt, die zwei zwischen dem Gelenkgehäuse und der Gelenkkugel eingesetzte Lagerschalen aus einem hartelastischen Kunststoff und zwei mit ihrem Innenmantel auf dem Außenmantel der Lagerschalen aufliegenden Druckringen aus einem weichelastischen Kunststoff aufweist. Die Lagerschalen haben im Auflagebereich der Druckringe sich zum Gelenkäußeren hin verjüngende Kegelflächen, auf denen sich die, einen konkav gewölbten Außenmantel aufweisenden Druckringe abstützen. Bei diesen vorbekannten Kugelgelenken werden die vorzugsweise aus Polyurethan bestehenden Druckringe bei der Montage durch Druck in axialer Richtung bis zur geforderten Gelenkverspannung verformt. Die formelastischen Ringe dienen somit einerseits der Erzeugung der erforderlichen Gelenkspannung und andererseits dem Ausgleich der im Kugelgelenk auftretenden Toleranzen. Die vorbekannten Kugelgelenke haben sich in der Praxis bewährt. Jedoch kann es bei den Polyurethan-Ringen zu einer nicht wünschenswerten Veränderung des Axialdruckes nach der Montage kommen. Diese Veränderung ist in erster Linie auf einen Materialfluß in vorhandene Hohlräume zurückzuführen. Hierdurch nehmen die Reibwerte sowie die Gelenkverspannung ab wogegen die Gelenkelastizität zunimmt.

Es ist ferner aus der DE-C 28 31 470 ein Kugelgelenk bekannt, bei welchem kugelzonenartige Endstücke mit einem Gummikörper haftend verbunden sind, der innenseits mit einem zwei zylindrische Befestigungsenden aufweisenden, kugeligen Innenteil und außenseits mit einem zylindrischen Mittelabschnitt eines Gehäuses haftend verbunden ist. Die Endstücke sind gegenüber dem Gehäuse verdrehgesichert gelagert und wirken in Form von Druckringen mit schräg zur Axialrichtung des Gehäuses angeordneten, an der Lagerschale anliegenden Stegen sowie mit zwei davon abgebogenen Schenkeln. In den einen der beiden Schenkel werden die das Gelenk axial verspannenden Kräfte eingeleitet.

Nachteil dieses vorbekannten Kugelgelenks ist, daß die als Druckringe wirkenden Endstücke nicht formelastisch ausgebildet sind, so daß die Gelenkverspannung von der Eigenelastizität der Endstücke beeinflußbar ist. Eventueller Verschleiß des Kugelgelenks wird daher nicht durch die Endstücke bzw. dem kugeligen Innenteil ausgeglichen.

Schließlich ist aus der DE-A 20 62 475 ein Gelenklager bekannt, welches aus einem Innenring mit balliger Außenfläche und einem den Innenring aufnehmenden Außenring mit entsprechend balliger Innenfläche besteht.

Ausgehend von diesem Stand der Technik liegt der Erfindung die **Aufgabe** zugrunde, ein gattungsgemäßes Kugelgelenk zu schaffen, das nach der Montage eine gleichbleibende Gelenkverspannung aufweist, in einfacher Weise automatisch zu montieren ist und eventuelle Toleranzen zwischen dem Gelenkgehäuse und der Lagerschale bzw. der Gelenkkugel ausgleicht.

Die technische **Lösung** dieser Aufgabenstellung sieht ein gattungsgemäßes Kugelgelenk vor, bei welchem der Druckring ein formelastischer Metallprofilring ist, mit einem die Auflagefläche bildenden, unter einem Winkel zur Axialrichtung des Gelenkgehäuseinnenraumes angeordneten Ringsteg und mit zwei in axialem Abstand zueinander von diesem Ringsteg radial nach außen abgebogenen Ringschenkeln, an denen die das Gelenk verspannenden Kräfte angreifen, derart, daß die Verspannung von der Eigenelastizität des Druckringes beeinflußt ist.

Das erfindungsgemäße Kugelgelenk hat den Vorteil, daß der eingesetzte Metallring bei Auftreten eines Axialdruckes nach der Montage nur in begrenztem Maße nachgibt, so daß die Gelenkverspannung und die Reibwerte nicht abnehmen. Ferner bleibt die Gelenkelastizität des erfindungsgemäßen Kugelgelenks über eine lange Zeit konstant. Die Montage des erfindungsgemäßen Kugelgelenks ist im Vergleich zu den vorbekannten Kugelgelenken mit Polyurethan-Druckringen leichter durchführbar, da zum einen die größere Stabilität des Stahldruckringes eine leichtere Automatisierung des Montageprozesses zuläßt und zum anderen eine Montage auch dann möglich ist, wenn der Freiraum im Gelenk bedingt durch die Summe der anfallenden Toleranzen kleiner als das Ringvolumen ist. Schließlich ist es bei dem erfindungsgemäßen Kugelgelenk vorteilhaft, daß die Verwendung eines geringeren Kunststoffanteils im Kugelgelenk ökologische Auswirkungen auf die Entsorgung von gebrauchten und/oder defekten Kugelgelenken hat, was in der Zukunft eine erhebliche Rolle bei den Produktionskosten derartiger Kugelgelenke spielen wird.

Zur Verringerung der Produktionskosten erfindungsgemäßer Kugelgelenke ist vorgesehen, daß der Druckring aus Stahl gefertigt ist.

Bei einer ersten Ausführungsform der Erfindung ist der über einen Teilbereich seiner axialen Länge zylindrisch ausgebildete Gelenkgehäuseinnenraum in einem Endbereich konisch ausgebildet wobei in diesem Endbereich eine erste Lagerschalenhälfte mit einer entsprechend konischen Mantelfläche anliegt. Ferner ist bei dieser Ausführungsform vorgesehen, daß die Gelenkkugel am axial gegenüberliegenden Ende des Gelenkgehäuseinnenraums unter Zwischenlage einer zweiten Lagerschalenhälfte mit dem Druckring verspannt ist. Bei dieser Ausführungsform des erfindungsgemäßen Kugelgelenkes ist es besonders vorteilhaft, daß die Montage in einfacher Weise automatisiert werden kann, da bei der Montage lediglich die in die Lagerschalenhälfte eingesetzte Gelenkkugel mit diesen gemeinsam in den Gelenkgehäuseinnenraum eingesetzt wird und an dem konisch ausgebildeten Endbereich des Gelenkgehäuseinnenraumes zur Anlage kommt und anschließend mit dem aufgesetzten Druckring verspannt wird. Diese erste Ausführungsform des Kugelgelenkes zeichnet sich durch eine geringe Anzahl einzelner Bauteile aus.

Bei einer zweiten Ausführungsform des erfindungsgemäßen Kugelgelenkes ist vorgesehen, daß die Gelenkkugel von zwei in den axial gegenüberliegenden Endbereichen des zylindrischen Gelenkgehäuseinnenraumes angeordneten Druckringen aus Stahl gehalten ist.

Zur genauen Lagefixierung der Druckringe ist bei beiden Ausführungsformen des erfindungsgemäßen Kugelgelenkes vorgesehen, daß der Gelenkgehäuseinnenraum an seinem Innenumfang ringförmige Nuten aufweist, in welche mindestens ein Ringschenkel des Druckringes bzw. der Druckringe mit seinem freien Rand eingreift. Bei einer Weiterentwicklung des Kugelgelenkes ist vorgesehen, daß der Winkel α, unter den der Ringsteg zur Axialrichtung des Gelenkgehäuseinnenraumes angeordnet ist, geringfügig von dem Winkel β zwischen der Axialrichtung und der Außenfläche der Lagerschalenhälfte im Auflagebereich abweicht. Diese Ausgestaltung bewirkt, daß der in axialer Richtung verlaufende Montagedruck den Ring über die Kugelschalenschräge spreizt und so in seine Endlage bringt, d.h. daß der Druckring mit dem die Schenkel verbindenden Steg auf dem Außenmantel der Lagerschale aufliegt. Durch das Spreizen des Druckringes wird der Druckring vorgespannt, so daß die gewünschte Gelenkverspannung mittels des Druckrings im Gelenkgehäuse erzielbar ist. Der Anordnungswinkel α des Ringsteges ist vorzugsweise geringfügig größer als der Neigungswinkel β der Außenfläche der Lagerschalenhälfte, wobei die Differenz zwischen den Winkeln bei einer bevorzugten Ausführungsform 1 Grad beträgt.

Die erforderliche Elastizität des Druckrings sowohl in axialer als auch in radialer Richtung wird dadurch erzielt, daß der Druckring an seinem der Lagerschale zugewandten Ende eine Vielzahl in axialer Richtung verlaufender Schlitze aufweist.

Eine weitere Verbesserung der Elastizität wird dadurch erzielt, daß die Schlitze bis nahezu an den der Lagerschale abgewandten Ringschenkel des Druckrings reichen. Eine bevorzugte Ausführungsform des Kugelgelenks hat einen Druckring mit acht im gleichen Umfangsabstand voneinander angeordneten Schlitzen.

Eine gute Verspannung des Druckrings im Gelenkgehäuseinnenraum wird dadurch erzielt, daß die Ringschenkel im rechten Winkel zur Axialrichtung des Druckrings angeordnet sind. Hierdurch bilden sich rechtwinklig zur Axialrichtung ausgerichtete Anschlagflächen des Druckrings aus.

Bei einer Ausführungsform des Kugelgelenkes mit einer erhöhten Elastizität, mit der größere Toleranzen ausgeglichen werden können, verläuft der der Lagerschale abgewandte Ringschenkel des Druckrings im wesentlichen rechtwinklig zu dem Ringsteg.

Eine weitere vorteilhafte Ausführungsform des Kugelgelenks ist dadurch gekennzeichnet, daß der zwischen den Ringschenkeln angeordnete Steg des Druckrings konvex ausgebildet ist. Hierdurch wird eine Verbesserung der Anpassung des Druckrings an die Kugelschale erzielt.

Der Druckring ist in vorteilhafter Weise mit einem Spannring im Gelenkgehäuse gehalten, welcher in eine in der Mantelfläche des Gelenkgehäuseinnenraums verlaufenden Ringnut eingesetzt ist. Diese Ausführungsform ist in besonders einfacher Weise auch automatisch zu montieren.

Schließlich ist vorgesehen, daß auch der Spannring aus Stahl gefertigt ist, so daß auch der Spannring bei der Entsorgung defekter oder verbrauchter Kugelgelenke keine Umweltbelastung darstellt.

Weitere Einzelheiten und Vorteile ergeben sich aus der nachfolgenden Beschreibung der zugehörigen Zeichnungen, in denen eine bevorzugte Ausführungsform dargestellt worden ist. In den Zeichnungen zeigt:

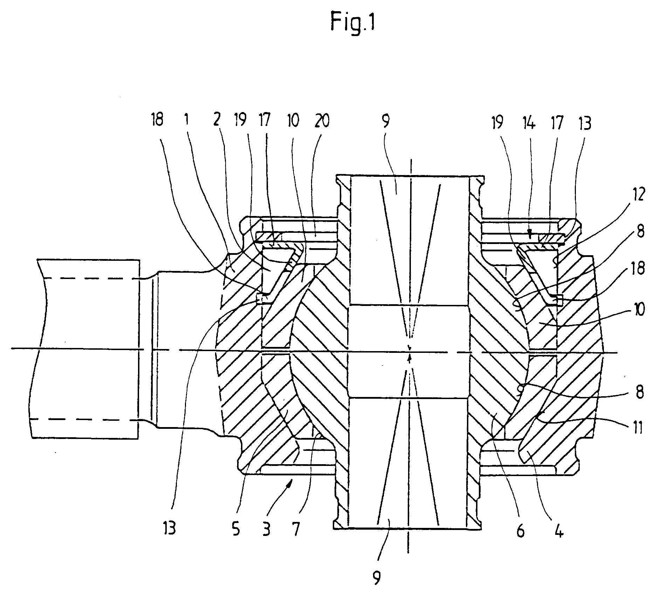

- Fig. 1: ein Kugelgelenk im Längsschnitt;
- Fig. 2: ein Sprengbild des Kugelgelenks gemäß Fig. 1 im Längsschnitt;
- Fig. 3: einen Druckring in einer Draufsicht;
- Fig. 4: eine erste Ausführungsform des Druckrings gemäß Fig. 3 im Längsschnitt entlang der Schnittlinie III-III in Fig. 3;
- Fig. 5: eine zweite Ausführungsform des Durckrings gemäß Fig. 3 im Längsschnitt entlang der Schnittlinie III-III der Fig. 3;
- Fig. 6: eine dritte Ausführungsform des Druckrings gemäß Fig. 3 im Längsschnitt entlang der Schnittlinie III-III in Fig. 3 und
- Fig. 7: eine vierte Ausführungsform des Druckrings gemäß Fig. 3 im Längsschnitt entlang der Schnittlinie III-III in Fig. 3.

Ein Kugelgelenk hat ein Gelenkgehäuse 1 mit einem zylindrisch ausgebildeten Gelenkgehäuseinnenraum 2, welcher an einem Endbereich 3 einen konisch ausgebildeten Anschlag 4 aufweist, an dem eine erste Lagerschalenhälfte 5 anliegt.

In den zylindrisch ausgebildeten Gelenkgehäuseinnenraum 2 ist eine Gelenkkugel 6 eingesetzt, deren Außenfläche 7 an der Gleitfläche 8 der ersten Lagerschalenhälfte 5 anliegt. Oberhalb der ersten Lagerschalenhälfte 5 ist auf die Gelenkkugel 6, welche angesetzte Zapfen 9 hat, eine zweite Lagerschalenhälfte 10 aufgesetzt, welche ebenfalls mit ihrer Gleitfläche 8 an der Außenfläche 7 der Gelenkkugel 6 anliegt.

Die Lagerschalenhälften 5 und 10 sind jeweils kugelschalenförmig ausgebildet, so daß die Außenfläche 11 der oberen Lagerschale 10 unter einem Winkel β zu der in Achsrichtung des Gelenkgehäuses 1 angeordneten Mantelfläche 12 des Gelenkgehäuseinnenraums 2 angeordnet ist. Die Mantelfläche 12 weist zwei ringförmige Nuten 13 auf.

Zwischen der Außenfläche 11 der Lagerschalenhälfte 10 und der Mantelfläche 12 des Gelenkgehäuseinnenraums 2 ist ein Druckring 14 angeordnet, der als elastischer Metallring ausgebildet ist.

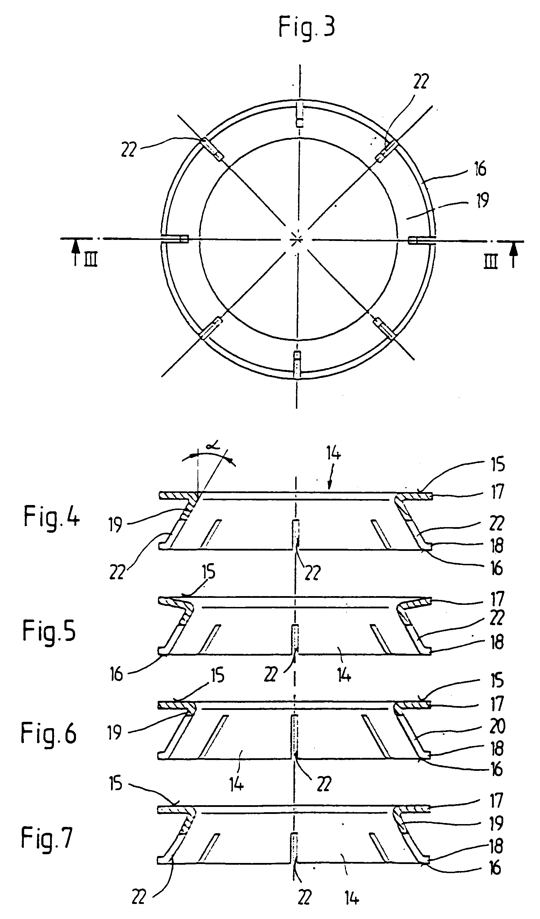

Der Druckring 14 ist im wesentlichen U-förmig ausgebildet und hat zwei jeweils eine Anschlagfläche 15,16 (vgl. Figuren 4 bis 7) bildende Ringschenkel 17,18 und einen die Ringschenkel 17,18 miteinander verbindenden Ringsteg 19. Der Ringschenkel 18 greift in die untere der beiden Nuten 13, so daß der als Stahlring ausgebildete Druckring 14 in axialer Richtung des Gelenkgehäuses 1 ortsfest gehalten ist. Der Druckring 14 liegt mit seiner Anschlagfläche 15 an einer die Verspannung der Lagerschalenhälften 5,10 und der Gelenkkugel 6 erzeugenden Spannring 20 an. Der Spannring 20 ist ebenfalls als Stahlring ausgebildet und in die obere der beiden Nuten 13 eingesetzt. Durch die Ausgestaltung des Druckrings 14 wird die gewünschte Verspannung des Kugelgelenks erzeugt.

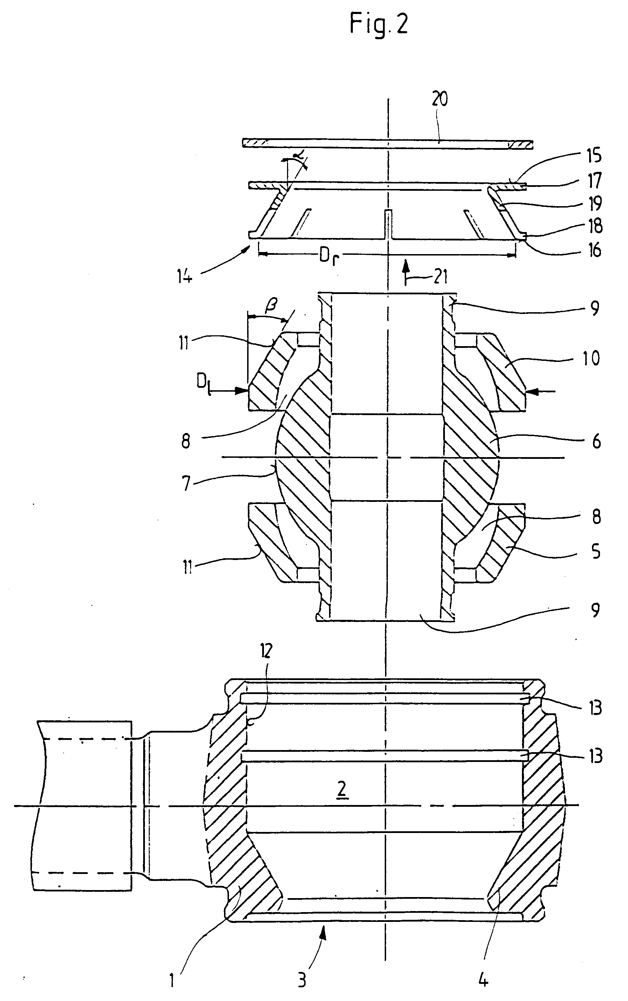

In den Figuren 3 bis 7 sind verschiedene Ausführungsformen des Druckrings 14 dargestellt, wobei die Fig. 3 eine Draufsicht auf den Spannring 14 in einer Blickrichtung entsprechend eines Pfeiles 21 in Fig. 2 darstellt. Der kreisringförmige Druckring ist wie bereits vorstehend ausgeführt im Querschnitt U-förmig ausgebildet, wobei die beiden Ringschenkel 17 und 18 jeweils eine Anschlagfläche 15,16 haben. Der zwischen den Ringschenkeln 17, 18 angeordnete Ringsteg 19 ist unter einem Winkel α zur Axialrichtung des Druckrings angeordnet, welcher geringfügig von einem Winkel β zwischen der Axialrichtung und der Außenfläche 11 der Lagerschalenhälfte 10 abweicht. Der Winkel α ist geringfügig größer als der Winkel β, wobei die Differenz zwischen diesen Winkeln ca. 1 Grad beträgt. Bei dem dargestellten Ausführungsbeispiel beträgt der Winkel β 29 Grad und der Winkel α 30 Grad. Der Durchmesser Dᵣ des Druckrings 14 ist kleiner als der Innendurchmesser D₁ der Lagerschalenhälfte 10, so daß der Druckring 14 beim Aufsetzen auf die Lagerschalenhälfte 10 gespreizt und gespannt wird.

Die in den Fig. 4 bis 7 dargestellten Druckringe 14 haben an ihren der Lagerschalenhälfte 10 zugewandten Enden eine Vielzahl in axialer Richtung verlaufender Schlitze 22. Wie aus der Fig. 3 zu erkennen ist, haben die Druckringe jeweils 8 im gleichen Abstand voneinander angeordnete Schlitze, wobei der Winkel zwischen zwei benachbarten Schlitzen 22 jeweils 45 Grad beträgt. Die Schlitze 22 erhöhen die erforderliche Elastizität des Druckrings 14 sowohl in axialer als auch in radialer Richtung. Bei der in Fig. 6 dargestellten Ausführungsform des Druckrings 14 reichen die Schlitze 22 bis nahezu an die, durch den der Lagerschalenhälfte 10 abgewandten Ringschenkel 17 gebildete Anschlagfläche 15 des Druckrings 14. Die längeren Schlitze 22 erhöhen die Elastizität sowohl in axialer als auch in radialer Richtung.

Bei den in den Fig. 4, 6 und 7 dargestellten Ausführungsbeispielen des Druckrings 14 ist die Anschlagfläche 15 im rechten Winkel zur Axialrichtung des Druckrings 14 angeordnet. Dagegen ist in Fig. 5 eine Ausführungsform des Druckrings dargestellt, bei welcher der der Lagerschalenhälfte 10 abgewandte Ringschenkel 17 des Druckrings 14 in axialer Richtung aufgebogen ist, so daß der eine elastische Zone bildende Ringschenkel 17 im wesentlichen rechtwinklig zu dem unter dem Winkel α angeordneten Ringsteg 19 verläuft. Dieser Druckring 14 ist insbesondere für den Ausgleich größerer Toleranzen zwischen dem Gelenkgehäuse 1 und der Gelenkkugel 6 geeignet.

Schließlich ist in Fig. 7 eine weitere Ausführungsform des Druckrings 14 dargestellt, wobei dieser Druckring 14 einen zwischen den Ringschenkel 17, 18 konvex ausgebildeten Ringteg 19 aufweist. Bei dieser Ausführungsform wird die Funktion der Differenz zwischen dem Winkel α und dem Winkel β durch die Konvexität des Ringstegs 19 erfüllt.

Bei einer zweiten nicht dargestellten Ausführungsform ist vorgesehen, daß die Gelenkkugel 6 von zwei an gegenüberliegenden Enden des zylindrischen Gelenkgehäuseinnenraums 2 angeorndeten Druckringen 14 aus Stahl gehalten ist.

### Bezugszeichenliste

- 1: Gelenkgehäuse
- 2: Gelenkgehäuseinnenraum
- 3: Endbereich
- 4: Ansatz
- 5: Lagerschalenhälfte
- 6: Gelenkkugel
- 7: Außenfläche
- 8: Gleitfläche
- 9: Zapfen
- 10: Lagerschalenhälfte
- 11: Außenfläche
- 12: Mantelfläche
- 13: Nut
- 14: Druckring
- 15: Anschlagfläche
- 16: Anschlagfläche
- 17: Ringschenkel
- 18: Ringschenkel
- 19: Ringsteg
- 20: Spannring
- 21: Pfeil
- 22: Schlitze

## Patentansprüche

1. Kugelgelenk mit einer in einem Gelenkgehäuse (1) angeordneten Gelenkkugel (6), mindestens einer zwischen dem Gelenkgehäuse (1) und der Gelenkkugel (6) angeordneten Lagerschale und mindestens einem zwischen Gelenkgehäuse (1) und Lagerschale angeordneten Druckring (14), welcher auf der Außenfläche (11) der Lagerschale aufliegt und diese in Axialrichtung des Gelenkgehäuseinnenraums (2) verspannt,
**dadurch gekennzeichnet,**
daß der Druckring (14) ein formelastischer Metallprofilring ist, mit einem die Auflagefläche bildenden, unter einem Winkel (α) zur Axialrichtung des Gelenkgehäuseinnenraumes angeordneten Ringsteg (19) und mit zwei in axialem Abstand zueinander von diesem Ringsteg (19) radial nach außen abgebogenen Ringschenkeln (17,18), an denen die das Gelenk verspannenden Kräfte angreifen, derart, daß die Verspannung von der Eigenelastizität des Druckringes beeinflußt ist.

2. Kugelgelenk nach Anspruch 1, dadurch gekennzeichnet, daß der Druckring (14) aus Stahl gefertigt ist.

3. Kugelgelenk nach Anspruch 1, dadurch gekennzeichnet, daß der über einen Teilbereich seiner axialen Länge zylindrisch ausgebildete Gelenkgehäuseinnenraum (2) in einem Endbereich (3) konisch ausgebildet ist, daß in diesem Endbereich eine erste Lagerschalenhälfte (5) mit einer entsprechend konischen Mantelfläche anliegt und daß die Gelenkkugel (6) am axial gegenüberliegenden Ende des Gelenkgehäuseinnenraums (2) unter Zwischenlage einer zweiten Lagerschalenhälfte (10) mit dem Druckring (14) verspannt ist.

4. Kugelgelenk nach Anspruch 1, dadurch gekennzeichnet, daß die Gelenkkugel (6) von zwei in den axial gegenüberliegenden Endbereichen des zylindrischen Gelenkgehäuseinnenraums (2) angeordneten Druckringen (14) aus Stahl gehalten ist.

5. Kugelgelenk nach Anspruch 3 oder 4, dadurch gekennzeichnet, daß der Gelenkgehäuseinnenraum (2) an seinem Innenumfang (12) ringförmige Nuten (13) aufweist, in welche mindestens ein Ringschenkel (18) des Druckringes (14) bzw. der Druckringe (14) mit seinem freien Rand eingreift.

6. Kugelgelenk nach Anspruch 1, dadurch gekennzeichnet, daß der Winkel (α), unter dem der Ringsteg (19) zur Axialrichtung des Gelenkgehäuseinnenraumes angeordnet ist, geringfügig von dem Winkel (β) zwischen der Axialrichtung und der Außenfläche (11) der Lagerschalenhälfte (10) im Auflagebereich abweicht.

7. Kugelgelenk nach Anspruch 6, dadurch gekennzeichnet, daß der Anordnungswinkel (α) des Ringsteges (19) geringfügig größer ist als der Neigungswinkel (β) der Außenfläche (11) der Lagerschalenhälfte (10).

8. Kugelgelenk nach Anspruch 7, dadurch gekennzeichnet, daß die Differenz zwischen den Winkeln (α,β) 1 Grad beträgt.

9. Kugelgelenk nach Anspruch 1, dadurch gekennzeichnet, daß der Druckring (14) an seinem der Lagerschale (5,10) zugewandten Ende eine Vielzahl in axialer Richtung verlaufender Schlitze (22) aufweist.

10. Kugelgelenk nach Anspruch 9, dadurch gekennzeichnet, daß die Schlitze (22) bis nahezu an den der Lagerschale (5,10) abgewandten Ringschenkel (17) des Druckrings (14) reichen.

11. Kugelgelenk nach Anspruch 9 oder 10, dadurch gekennzeichnet, daß der Druckring (14) acht im gleichen Umfangsabstand voneinander angeordnete Schlitze (22) hat.

12. Kugelgelenk nach Anspruch 1, dadurch gekennzeichnet, daß die Ringschenkel (15,16) im rechten Winkel zur Axialrichtung des Druckrings (14) angeordnet sind.

13. Kugelgelenk nach Anspruch 1, dadurch gekennzeichnet, daß der der Lagerschale (5,10) abgewandte Ringschenkel (17) des Druckrings (14) im wesentlichen rechtwinklig zu dem Ringsteg (19) verläuft.

14. Kugelgelenk nach Anspruch 1, dadurch gekennzeichnet, daß der zwischen den Ringschenkeln (17,18) angeordnete Steg (19) des Druckrings (14) konvex ausgebildet ist.

15. Kugelgelenk nach Anspruch 1, dadurch gekennzeichnet, daß der Druckring (14) mit einem Spannring (20) im Gelenkgehäuse (1) gehalten ist, welcher in eine in der Mantelfläche (12) des Gelenkgehäuseinnenraums (2) verlaufende Ringnut (13) eingesetzt ist.

16. Kugelgelenk nach Anspruch 15, dadurch gekennzeichnet, daß der Spannring (20) aus Stahl gefertigt ist.

## Claims

1. Ball-and-socket joint having a spherical part (6) disposed in a joint housing (1), at least one bearing shell disposed between the joint housing (1) and the spherical part (6), and at least one thrust ring (14) which is disposed between the joint housing (1) and bearing shell and which rests on the outer surface (11) of the bearing shell and braces the latter in the axial direction of the joint housing interior (2), characterized in that the thrust ring (14) is a dimensionally elastic metal profiled ring having a ring web (19) which forms the bearing surface and is disposed at an angle (α) relative to the axial direction of the joint housing interior and having two ring legs (17, 18) which are at an axial spacing from one another, are curved radially outwards away from this ring web (19), and on which the forces bracing the joint act in such a way that the bracing is influenced by the inherent elasticity of the thrust ring.

2. Ball-and-socket joint according to Claim 1, characterized in that the thrust ring (14) is made of steel.

3. Ball-and-socket joint according to Claim 1, characterized in that the joint housing interior (2) which is cylindrical over a partial region of its axial length is conical in an end region (3); in that a first bearing shell half (5) abuts with a correspondingly conical generated surface in this end region; and in that the spherical part (6) is braced by the thrust ring (14) at the axially opposite end of the joint housing interior (2) with the interposition of a second bearing shell half (10).

4. Ball-and-socket joint according to Claim 1, characterized in that the spherical part (6) is held by two steel thrust rings (14) disposed in the axially opposite end regions of the cylindrical joint housing interior (2).

5. Ball-and-socket joint according to Claim 3 or 4, characterized in that the joint housing interior (2) has on its internal periphery (12) annular grooves (13) in which at least one ring leg (18) of the thrust ring (14) or of the thrust rings (14) engages with its free edge.

6. Ball-and-socket joint according to Claim 1, characterized in that the angle (α), at which the ring web (19) is disposed relative to the axial direction of the joint housing interior, differs slightly from the angle (β) between the axial direction and the outer surface (11) of the bearing shell half (10) in the bearing region.

7. Ball-and-socket joint according to Claim 6, characterized in that the angle of disposition (α) of the ring web (10) is slightly greater than the angle of inclination (β) of the outer surface (11) of the bearing shell half (10).

8. Ball-and-socket joint according to Claim 7, characterized in that the difference between the angles (α, β) is one degree.

9. Ball-and-socket joint according to Claim 1, characterized in that the thrust ring (14) comprises at its end facing the bearing shell (5, 10) a plurality of slots (22) extending in the axial direction.

10. Ball-and-socket joint according to Claim 9, characterized in that the slots (22) extend almost as far as the ring leg (17), of the thrust ring (14), remote from the bearing shell (5, 10).

11. Ball-and-socket joint according to Claim 9 or 10, characterized in that the thrust ring (14) has eight slots (22) disposed at the same peripheral spacing from one another.

12. Ball-and-socket joint according to Claim 1, characterized in that the ring legs (15, 16) are disposed at a right-angle to the axial direction of the thrust ring (14).

13. Ball-and-socket joint according to Claim 1, characterized in that the ring leg (17), of the thrust ring (14), remote from the bearing shell (5, 10) extends substantially perpendicular to the ring web (19).

14. Ball-and-socket joint according to Claim 1, characterized in that the web (19), of the thrust ring (14), disposed between the ring legs (17, 18) is convex.

15. Ball-and-socket joint according to Claim 1, characterized in that the thrust ring (14) is held in the joint housing (1) by a clamping ring (20) which is inserted in an annular groove (13) extending in the generated surface (12) of the joint housing interior (2).

16. Ball-and-socket joint according to Claim 15, characterized in that the clamping ring (20) is made of steel.

## Revendications

1. Articulation à rotule, comprenant une rotule d'articulation (6) disposée dans un boîtier d'articulation (1), au moins un coussinet disposé entre le boîtier d'articulation (1) et la rotule d'articulation (6), et au moins un anneau de pression (14) disposé entre le boîtier d'articulation (1) et le coussinet, qui prend appui sur la surface extérieure (11) du coussinet et qui serre ce dernier dans la direction axiale de la cavité intérieure (2) du boîtier d'articulation, caractérisée en ce que l'anneau de pression (14) est un anneau profilé métallique à élasticité de forme comprenant un rebord annulaire (19) qui forme la surface d'appui et est disposé selon un angle (α) par rapport à la direction axiale de la cavité intérieure du boîtier d'articulation et comprenant deux branches annulaires (17, 18) qui sont distantes axialement l'une de l'autre et sont tournées radialement vers l'extérieur de ce rebord annulaire (19) et sur lesquelles s'exercent les forces qui serrent l'articulation, de sorte que le serrage est influencé par l'élasticité propre de l'anneau de pression.

2. Articulation à rotule selon la revendication 1, caractérisée en ce que l'anneau de pression (14) est réalisé en acier.

3. Articulation à rotule selon la revendication 1, caractérisée en ce que la cavité intérieure (2) du boîtier d'articulation conçue sous forme cylindrique sur une zone partielle de sa longueur axiale présente une forme conique dans une zone d'extrémité (3), en ce que, dans cette zone d'extrémité, est appliquée une première moitié de coussinet (5) présentant une surface d'enveloppe de conicité correspondante, et en ce que la rotule d'articulation (6) est serrée par l'anneau de pression (14) à l'extrémité axialement opposée de la cavité intérieure (2) du boîtier d'articulation, en intercalant une seconde moitié de coussinet (10).

4. Articulation à rotule selon la revendication 1, caractérisée en ce que la rotule d'articulation (6) est retenue par deux anneaux de pression (14) en acier disposés dans des zones d'extrémité axialement opposées de la cavité intérieure cylindrique (2) du boîtier d'articulation.

5. Articulation à rotule selon la revendication 3 ou 4, caractérisée en ce que la cavité intérieure (2) du boîtier d'articulation comporte, sur sa périphérie intérieure (12), des gorges annulaires (13) dans lesquelles s'engage le bord libre d'au moins une branche annulaire (18) de l'anneau de pression (14) ou des anneaux de pression (14).

6. Articulation à rotule selon la revendication 1, caractérisée en ce que, dans la zone d'appui, l'angle (α), selon lequel le rebord annulaire (19) est disposé par rapport à la direction axiale de la cavité intérieure du boîtier d'articulation, diffère légèrement de l'angle (β) compris entre la direction axiale et la surface extérieure (11) de la moitié de coussinet (10).

7. Articulation à rotule selon la revendication 6, caractérisée en ce que l'angle de positionnement (α) du rebord annulaire (19) est légèrement supérieur à l'angle d'inclinaison (β) de la surface extérieure (11) de la moitié de coussinet (10).

8. Articulation à rotule selon la revendication 7, caractérisée en ce que la différence entre les angles (α, β) est de 1 degré.

9. Articulation à rotule selon la revendication 1, caractérisée en ce qu'à son extrémité tournée vers le coussinet (5, 10), l'anneau de pression (14) comporte une pluralité de fentes (22) s'étendant dans la direction axiale.

10. Articulation à rotule selon la revendication 9, caractérisée en ce que les fentes (22) atteignent presque la branche annulaire (17) de l'anneau de pression (14) opposée au coussinet (5, 10).

11. Articulation à rotule selon la revendication 9 ou 10, caractérisée en ce que l'anneau de pression (14) comporte huit fentes (22) disposées à intervalles réguliers les unes par rapport aux autres.

12. Articulation à rotule selon la revendication 1, caractérisée en ce que les branches annulaires (15, 16) sont disposées à angle droit par rapport à la direction axiale de l'anneau de pression (14).

13. Articulation à rotule selon la revendication 1, caractérisée en ce que la branche annulaire (17) de l'anneau de pression (14) opposée au coussinet (5, 10) s'étend sensiblement à angle droit par rapport au rebord annulaire (19).

14. Articulation à rotule selon la revendication 1, caractérisée en ce que le rebord (19) de l'anneau de pression (14) situé entre les branches annulaires (17, 18) est de forme convexe.

15. Articulation à rotule selon la revendication 1, caractérisée en ce que l'anneau de pression (14) est maintenu dans le boîtier d'articulation (1) par un anneau de serrage (20) qui est logé dans une gorge annulaire (13) ménagée dans la surface d'enveloppe (12) de la cavité intérieure (2) du boitier d'articulation.

16. Articulation à rotule selon la revendication 15, caractérisée en ce que l'anneau de serrage (20) est réalisé en acier.
